Europäisches Patentamt

European Patent Office

Office européen des brevets

(11) Veröffentlichungsnummer: **0 179 297**

A2

(12) **EUROPÄISCHE PATENTANMELDUNG**

(21) Anmeldenummer: 85112156.6

(22) Anmeldetag: 25.09.85

(51) Int. Cl.⁴: **G 02 B 26/10**

(30) Priorität: 24.10.84 DE 3438898

(43) Veröffentlichungstag der Anmeldung:
30.04.86 Patentblatt 86/18

(84) Benannte Vertragsstaaten:
DE FR GB

(71) Anmelder: Bodenseewerk Gerätetechnik GmbH
Alte Nussdorfer Strasse 15 Postfach 1120
D-7770 Überlingen/Bodensee(DE)

(72) Erfinder: Weber, Berthold
Kaiserpfalzstrasse 71
D-7762 Bodman(DE)

(72) Erfinder: Giesenberg, Peter
Schulweg 1
D-7777 Salem 1(DE)

(72) Erfinder: Steimel, Johannes
Zur Schifflände 20
D-7750 Konstanz 13(DE)

(74) Vertreter: Weisse, Jürgen, Dipl.-Phys. et al,
Patentanwälte Dipl.-Phys. Jürgen Weisse Dipl.-Chem. Dr.
Rudolf Wolgast Bökenbusch 41 Postfach 11 03 86
D-5620 Velbert 11 Langenberg(DE)

(54) Optische Abtasteinrichtung, insbesondere für Suchköpfe bei zielsuchenden Flugkörpern.

(57) Eine optische Abtasteinrichtung enthält einen Lagerteil (12) der in einem Grundteil (10) um eine Drehachse (16) drehbar gelagert ist. In dem Lagerteil (12) ist eine Halterung (18) um eine Drehachse (22) die exzentrisch zur Drehachse (16) ist, drehbar gelagert. Ein Linsenpaar (36,38) sitzt exzentrisch in der Halterung (18) und bildet einen Teil eines Abbildungssystems, durch das ein Gesichtsfeld in der Ebene eines grundteilfesten Detektors abgebildet wird. Der Lagerteil (12) und die Halterung (18) werden gegensinnig angetrieben.

Fig. 2

Optische Abtasteinrichtung, insbesondere für
Suchköpfe bei zielsuchenden Flugkörpern

Die Erfindung betrifft eine optische Abtasteinrichtung für Suchköpfe bei zielsuchenden Flugkörpern,
enthaltend

(a)   einen Grundteil

(b)   einen an dem Grundteil sitzenden Dretektor

(c)   eine um eine Drehachse drehbar gelagerte und
      antreibbare Halterung und

(d)   ein optisches Abbildungssystem,

      $(d_1)$   durch welches ein Gesichtsfeld in der Ebene
              des Detektors abbildbar ist und

0179297

(d$_2$) welches rotationssymmetrische abbildende optische Mittel enthält, die auf der Halterung angeordnet sind und eine optische Achse definieren, welche exzentisch zu der Drehachse der Halterung verläuft.

Solche optischen Abtasteinrichtungen finden insbesondere Anwendung bei zielsuchenden Flugkörpern, beispielsweise Luft-Luft-Raketen. Es wird ein Gesichtsfeld längs einer üblicherweise rosettenförmigen Bahn abgetastet. Aus den dabei erhaltenen Signalen wird die Ablage eines Ziels von der Achse des Suchers bestimmt. Die so erhaltenen Ablagesignale werden benutzt, um den Sucher mit der Sucherachse auf das Ziel auszurichten. Der Sucher bildet dabei ein von den Bewegungen des Flugkörpers entkoppeltes System.

Die rosettenförmige Abtastbahn entsteht durch die Überlagerung zweier kreisender Abtastbewegungen von unterschiedlicher Drehzahl und entgegengesetztem Drehsinn. Es sind verschiedene Sucher mit rosettenförmiger Abtastbahn bekannt.

Die US-PS 4 009 393 zeigt einen Sucher mit rosettenförmiger Abtastbahn, bei welchem das abbildende optische System von einer auf dem Rotor angeordneten Linse gebildet ist. Die optische Achse der Linse verläuft exzentrisch zur Umlaufachse des Rotors. Dadurch wird eine kreisende Abtastbewegung mit der Umlaufdrehzahl des Rotors erzeugt. Der Rotor wird über eine Statorwicklung angetrieben. Eine zweite kreisende Abtastbewegung wird erzeugt durch ein Prisma, das im Strahlengang an einer den Detektor umgebenden, um eine Längsachse drehbaren Hülse sitzt. Diese Hülse wird von einem gesonderten Motor unabhängig von dem Rotor angetrieben.

Die US-PS 4 030 807 zeigt einen Sucher, bei welchem das auf dem Rotor angeordnete Abbildungssystem ein Cassegrain-System mit einem als ringförmiger Hohlspiegel ausgebildeten, dem Gesichtsfeld zugewandten Primärspiegel und einem dem Primärspiegel zugewandten, leicht konvexen Sekundärspiegel ausgebildet ist. Der Rotor ist kardanisch um einen Mittelpunkt schwenkbar gelagert. Das Abbildungssystem erzeugt ein Bild des Gesichtsfelds im Bereich dieses Mittelpunkts. Einer der Spiegel ist etwas gegen die Rotorachse verkantet, wodurch eine kreisende Abtastbewegung mit der Rotordrehzahl erhalten wird. Durch ein flugkörperfestes Objektiv wird das so erhaltene Gesichtsfeldbild über einen Planspiegel in der Ebene eines Detektors abgebildet. Der Planspiegel sitzt auf der Stirnfläche der Welle eines Motors und ist wiederum leicht verkantet gegen die Umlaufachse dieser Welle. Dadurch wird die zweite kreisende Abtastbewegung mit einer von der Rotordrehzahl verschiedenen Drehzahl erzeugt.

Die US-PS 4 039 246 zeigt einen Sucher, bei welchem als Abbildungssystem ebenfalls ein Cassegrain-System mit einem ringförmigen Hohlspiegel als Primärspiegel und einem diesem zugewandten Planspiegel als Sekundärspiegel vorgesehen ist. Dort bildet die optische Achse des Primärspiegels einen kleinen Winkel mit der Rotorachse. Das ergibt eine kreisende Abtastbewegung mit der Rotordrehzahl. Außerdem ist der Sekundärspiegel etwas verkantet und gegenüber dem Rotor drehbar gelagert. Der Sekundärspiegel wird durch einen gesonderten Motor mit einer von der Rotordrehzahl verschiedenen Drehzahl angetrieben. Das ergibt die überlagerte zweite kreisende Abtastbewegung, so daß insgesamt das Gesichtsfeld längs einer rosettenförmigen Bahn abgetastet wird.

In der US-PS 4 413 177 ist ein Sucher mit einem Cassegrain-System beschrieben, bei welcher die beiden kreisenden Abtastbewegungen mit einem einzigen Antriebsmotor, nämlich dem Antrieb des Rotors, erzeugt werden. Auch hier ist die optische Achse des Primärspiegels gegen die Rotorachse geneigt, wodurch die erste kreisende Abtastbewegung erzeugt wird. Die zweite kreisende Abtastbewegung wird, wie bei der vorstehend diskutierten US-PS 4 039 246, durch eine Verkantung des Sekundärspiegels erreicht. Der Sekundärspiegel wird jedoch von dem umlaufenden Rotor über ein nach Art eines Planetengetriebes aufgebautes Reibgetriebe angetrieben. Der Rotor ist auf einem Innenrahmen einer kardanischen Lageranordnung um die Rotorachse drehbar gelagert. In dem Innenrahmen ist ein Fenster oder eine Linse mit einer Fassung drehbar gelagert. An dem Fenster ist der Sekundärspiegel mit einem zentralen Zapfen befestigt. Der Innenrahmen bildet einen Käfig für Kugeln, die sowohl an dem Rotor als auch an der Fassung des Fensters reibend anliegen. Der Rotor wirkt dann wie das Hohlrad eines Planetengetriebes, die Fassung wirkt als Sonnenrad und die Kugeln übernehmen die Funktion der Planetenräder. Es erfolgt so eine Drehzahlübersetzung. Der Sekundärspiegel läuft schneller als der Rotor.

Durch die EP-OS 79 684 ist ein optischer Sucher für zielsuchende Flugkörper bekannt, bei dem ein Gesichtsfeld längs eines rosettenförmigen Weges abgetastet wird. Der Sucher enthält ein optisches Abbildungssystem, das nach Art eines Cassegrain-Systems ausgebildet ist mit einem ringförmigen Hohlspiegel als Primärspiegel und einem diesem gegenüberliegenden Planspiegel als Sekundärspiegel. Das optische System sitzt auf einem Rotor, der um seine Figurenachse umläuft und durch eine kardanische Lagerung mit seiner Figurenachse in zwei Freiheitsgraden um einen Mittelpunkt verschwenkbar ist. Das Gesichtsfeld wird über den Hohlspiegel und den Planspiegel sowie über einen weiteren, dem Planspiegel gegenüberliegenden, konvexen Spiegel und noch einen Planspiegel in einer ersten Bildebene abgebildet. Die erste Bildebene wird über ein Linsensystem in einer zweiten Bildebene abgebildet, in welcher der Detektor sitzt. Der Detektor ist gehäusefest in dem Mittelpunkt angeordnet. Das Linsensystem enthält eine erste und eine zweite Linse, deren optische Achsen beide mit der Rotorachse zusammenfallen. Zwischen den beiden Linsen verläuft der Strahlengang parallel. Der besagte weitere konvexe Spiegel sitzt an einer die erste und die zweite Linse aufnehmenden Fassung. Auf der Fassung ist der Rotor um seine Figurenachse drehbar gelagert. Das Linsensystem ist somit bei einer Schwenkbewegung des Rotors stets zu der Fi-

6 0179297

gurenachse des Rotors ausgerichtet. Die Fassung ist mit dem Rotor über ein Planetengetriebe gekoppelt. Das Planetengetriebe ist ähnlich aufgebaut wie es oben im Zusammenhang mit der US-PS 4 413 177 beschrieben ist. Dadurch führt die Fassung des Linsensystems mit dem ringförmigen Spiegel eine im Vergleich· zum Rotor schnellere Drehbewegung entgegen der Umlaufrichtung des Rotors aus. Der Sekundärspiegel des Cassegrain-Systems ist leicht gegen die Rotorachse geneigt, um die der Rotor umläuft. Das ergibt eine kreisende Abtastbewegung mit der Rotordrehzahl. Ebenso ist der konvexe Spiegel an der Fassung des Linsensystems etwas gegen die Rotorachse geneigt. Das liefert eine der ersten Abtastbewegung überlagerte,kreisende Abtastbewegung höherer Drehzahl. Durch die beiden Spiegel wird erreicht, daß jeder Punkt des Gesichtsfeldbildes relativ zu dem Detektor eine rosettenförmige Bahn beschreibt.

Es sind weiterhin optische Sucher bekannt, bei denen ein Gesichtsfeld längs einer geradlinigen Bahn abgetastet wird. Dabei wird der Strahlengang über ein schwingendes optisches Glied, z.B. einen Schwingspiegel, geleitet. Die dabei auftretenden Massenkräfte können zu Verformungen oder zu Schwingungen führen, welche wiederum Ungenauigkeiten der Abbildung und der Signalauswertung zur Folge haben können. Bei hohen Bildfrequenzen sind große Antriebsleistungen erforderlich, die bei vielen, z.B. militärischen, Anwendungen nicht zur Verfügung gestellt werden können.

Der Erfindung liegt die Aufgabe zugrunde, eine optische Abtastvorrichtung der eingangs definierten Art zu schaffen, die kompakt und steif aufgebaut und leicht auszuwuchten ist und bei welcher die Antriebsleistung gering gehalten werden kann.

Eine speziellere Aufgabe der Erfidnung besteht darin eine optische Abtastvorrichtung dieser Art zu schaffen, die eine Abtastung eines Gesichtfeldes längs einer geradlinigen Bahn gestattet.

Die Aufgabe wird erfindungsgemäß dadurch gelöst, daß

(e)     die Halterung in einem seinerseits gegenüber dem Grundteil um eine Drehachse drehbar gelagerten und antreibbaren Lagerteil gelagert ist und

(f)     die Drehachse der Halterung exzentrisch zu der Drehachse dieses Lagerteils verläuft.

Halterung und Lagerteil können dabei kompakt ineinander angeordnet werden, wobei sich eine steife Struktur ergibt. Die Bewegung der optischen Mittel ergibt sich aus reinen Drehbewegungen der Halterung und des Lagerkörpers, wobei eine dynamische Auswuchtung möglich ist. Die Antriebsleistung braucht keine Massen zu beschleunigen und zu verzögern sondern praktisch nur die Lagerreibung zu überwinden. Es reichen daher geringe Antriebsleistungen. Entsprechend wird die Wärmeverlustleistung vermindert.

Die speziellere Aufgabe, ein Gesichtsfeld längs einer geradlinigen Bahn abzutasten, kann mit einer solchen Abtasteinrichtung dadurch gelöst werden, daß

(a)     die Halterung und der Lagerteil mit gleicher Drehzahl gegensinnig angetrieben sind und

(b)     die Exzentrizität zwischen den Drehachsen der Halterung und des Lagerteils gleich ist der Exzentrizität zwischen der Drehachse der Halterung und der optischen Achse der darauf angeordneten abbildenden optischen Mittel.

Ausgestaltungen der Erfindung sind Gegenstand der weiteren Unteransprüche.

Ein Ausführungsbeispiel der Erfindung ist nachstehend unter Bezugnahme auf die zugehörigen Zeichnungen näher erläutert.

Fig. 1   veranschaulicht das Prinzip der Abtasteinrichtung.

Fig. 2   zeigt schematisch einen Längsschnitt der Abtasteinrichtung.

Fig. 3   zeigt schematisch einen Antrieb der Abtasteinrichtung, so daß diese eine Abtastung längs einer geraden Bahn bewirkt.

Fig. 4   zeigt eine konstruktive Ausführung der Abtasteinrichtung.

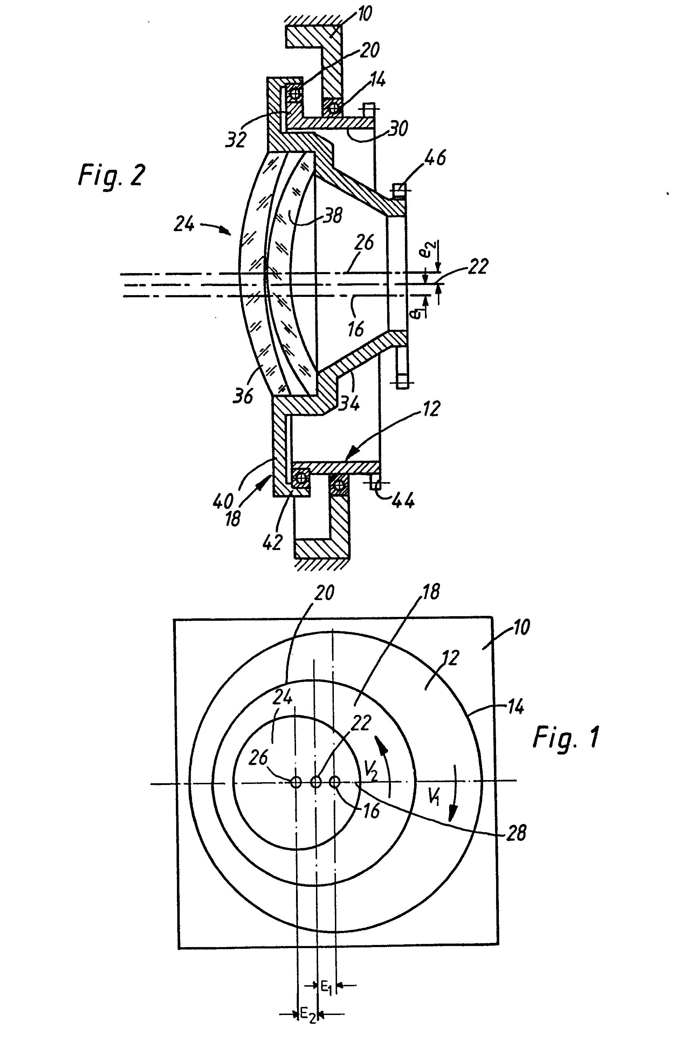

In der schematischen Darstellung von Fig. 1 ist mit 10 ein Grundteil oder Gehäuse bezeichnet. In dem Grundteil 10 ist ein zylindrischer Lagerteil 12 in einem Lager 14 um eine Drehachse 16 drehbar gelagert. In dem Lagerteil 12 ist eine zylindrische Halterung 18 in einem Lager 20 um eine Drehachse 22 drehbar gelagert. Die Drehachse 22 ist um eine Exzentrizität $e_1$ gegenüber der Drehachse 16 versetzt. An oder in der Halterung 18 sitzen rotationssymmetrische optische Mittel 24, z.B. eine Linse oder eine Linsenanordnung. Die optischen Mittel 24 definieren eine optische Achse 26. Die optische Achse 26 verläuft um eine Exzentrizität $e_2$ exzentrisch zu der Drehachse 22 der Halterung 18 und parallel zu dieser Drehachse 22. Bei der in Fig. 1 dargestellten Ausführung sind die beiden Exzentrizitäten $e_1$ und $e_2$ gleich. Der Lagerteil 12 wird mit

einer Drehzahl $n_1$ im Uhrzeigersinn angetrieben. Die Halterung 18 wird mit einer Drehzahl $n_2$ entgegen dem Uhrzeigersinn angetrieben. Es läßt sich zeigen, daß dann, wenn $n_1 = n_2$ ist, die optische Achse 26 der abbildenden optischen Mittel 24 sich auf einer geradlinigen Bahn 28 der Länge 4 $e_1$ hin- und herbewegt. Es erfolgt also eine Abtastung eines Gesichtsfelds längs einer geradlinigen Bahn.

Wenn die Drehzahlen $n_1$ und $n_2$ ungleich sind, dann folgt die optische Achse 26 der abbildenden optischen Mittel 24 einer rosettenförmigen Bahn. Wenn die Exzentrizitäten $e_1$ und $e_2$ ungleich sind, ergeben sich Bahnkurven, welche die Achse 16 nicht schneiden. Es wird das Gesichtsfeld ähnlich wie bei den oben geschilderten bekannten Anordnungen längs einer rosettenförmigen Bahn abgetastet. Diese Abtastung erfolgt jedoch mittels eines einzigen optischen Gliedes, das längs dieser rosettenförmigen Bahn bewegt wird, (oder einer Gruppe gemeinsam bewegter optischer Glieder).

In Fig. 2 ist der Aufbau einer optischen Abtastvorrichtung der vorliegenden Art schematisch in einem Längsschnitt dargestellt. Entsprechende Teile sind in Fig. 2 mit den gleichen Bezugszeichen versehen wie in Fig. 1.

Der Lagerteil 12 ist als zylindrische Hülse 30 dargestellt, die über das als Kugellager ausgebildete Lager 14 um die Drehachse 16 drehbar in dem Grundteil 10 gelagert ist. An dem einen Ende der Hülse 30 sitzt ein Exzenter 32 mit der Exzentrizität $e_1$. Auf diesem Exzenter 32 ist die Halterung 18 über das als Kugellager ausgebildete Lager 20 um die Drehachse 22 drehbar gelagert. Die Halterung 18 enthält eine Fassung 34, in welcher als abbildende optische Mittel 24 ein Paar von Linsen 36 und 38 sitzt. Die Linsen 36 und 38 definieren eine optische Achse 26. An die Fassung 34 schließt sich ein Exzenter 40 mit der Exzentrizität $e_2$ bezogen auf die optische Achse 26 an.

Der Exzenter 40 erstreckt sich mit einem abgewinkelten Rand 42 axial über das Lager 20 und den Exzenter 32. So ist die Halterung 18 über das Lager 20 um die Drehachse 22 auf dem Exzenter 32 gelagert. Die Linsen 36, 38 sind durch den Exzenter 40 wiederum exzentrisch zu dem Lager 20 angeordnet. Die optische Achse 26 ist um die Exzentrizität $e_2$ gegen die Drehachse 22 versetzt.

An dem Lagerteil 12 ist ein Zahnkranz 44 vorgesehen. Der Zahnkranz 44 sitzt an der Hülse 30 an deren dem Exzenter 32 abgewandten Ende. Der Zahnkranz 44 ist konzentrisch zu der Drehachse 16 des Lagerteils 12. Ein weiterer Zahnkranz 46 ist an der Halterung 34 gebildet. Der Zahnkranz 46 sitzt an der Fassung 36, ist jedoch konzentrisch zu der Drehachse 22 der Halterung 34.

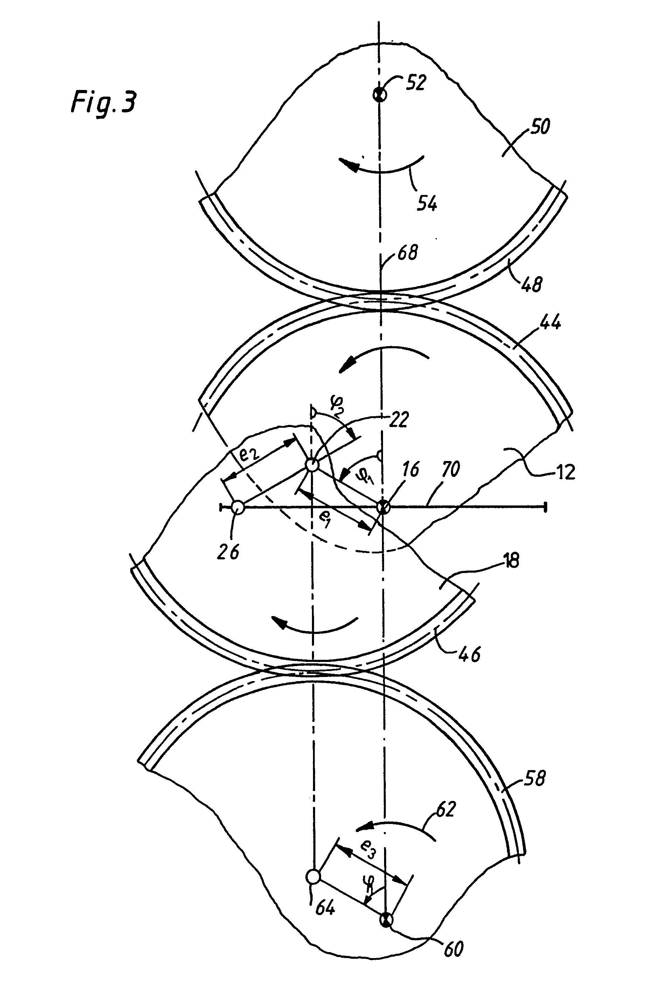

Fig. 3 ist eine schematische Darstellung und zeigt ein Getriebe zum Antrieb des Lagerkörpers 12 und der Halterung 18. Entsprechende Teile tragen in Fig. 3 die gleichen Bezugszeichen wie in Fig. 1 und 2.

Ein erster Zahnkranz 48 an einem Zahnrad 50 ist um eine grundteilfest Antriebsachse 52 in Richtung des Pfeiles 54, also im Uhrzeigersinn, antreibbar. Der Zahnkranz 48 ist konzentrisch zur Antriebsachse 52. Der zweite Zahnkranz 44 ist an dem Lagerteil 12 konzentrisch zu dessen Drehachse 16 angebracht, wie in Fig. 2 schon dargestellt ist. Der zweite Zahnkranz 44 ist mit dem ersten Zahnkranz 48 in Eingriff.

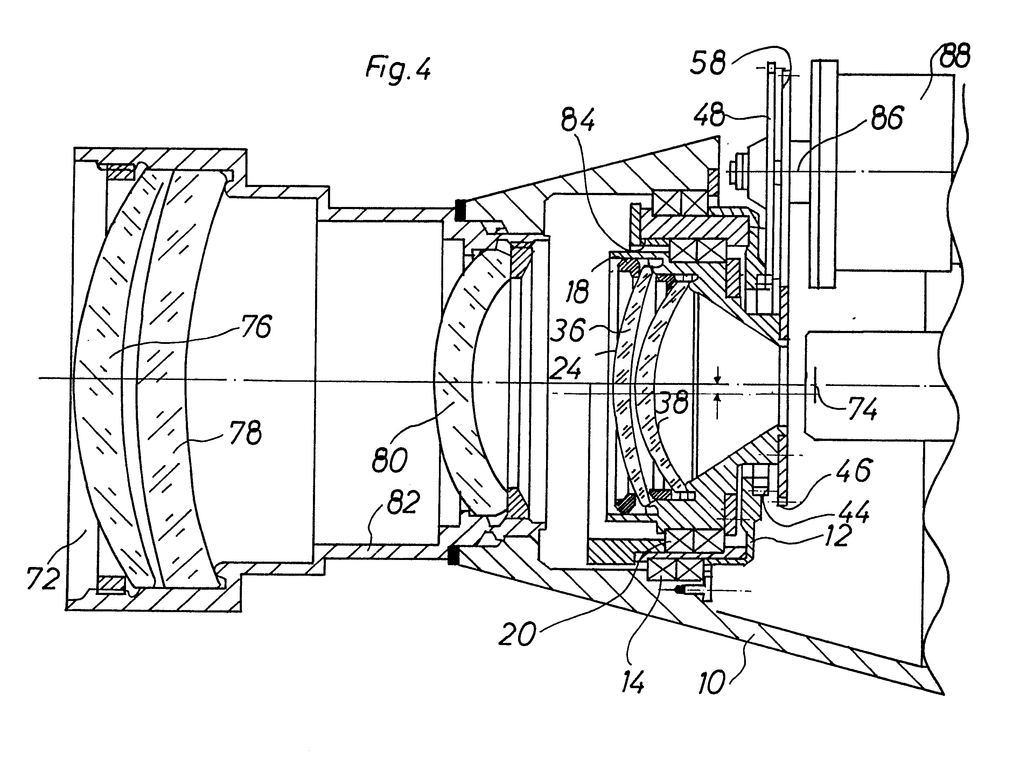

Ein dritter Zahnkranz 58 ist um eine grundteilfeste Antriebsachse 60 in Richtung des Pfeils 62, also entgegen dem Uhrzeigersinn, antreibbar. Der dritte Zahnkranz 58 ist zu dieser Antriebsachse 60 mit einer Exzentrizität $e_3$ exzentrisch, die gleich der Exzentrizität $e_1$ zwischen den Drehachsen 16 und 22 des Lagerteils 12 bzw. der Halterung 18 ist. Der Mittelpunkt des dritten Zahnkranzes 58 ist mit 64 bezeichnet. Der vierte Zahnkranz 46 ist an der Halterung 18 konzentrisch zu deren Drehachse 22 angebracht. Mit 26 ist auch in Fig. 4 die optische Achse der (hier nicht dargestellten) abbildenden optischen Mittel 24 bezeichnet. Der Lagerteil 12 läuft mit der gleichen Drehzahl im Uhrzeigersinn um wie der dritte Zahnkranz 58 Dadurch bleiben die Verbindungsstrecken zwischen den Drehachsen 16 und 22 bzw. zwischen der Antriebsachse 60 und dem Mittelpunkt 64 bei dem Umlauf stets parallel und dementsprechend bleibt auch der Abstand der Drehachse 22 und des Mittelpunktes 64 konstant. Die Zahnkränze 46 und 58 bleiben ständig im Eingriff.

Die Wälzkreisdurchmesser von drittem Zahnkranz 58 und viertem Zahnkranz 46 sind gleich.

Die beschrieben Anordnung arbeitet wie folgt:

Die Lage der optischen Achse 26 relativ zu dem Grundteil 10 ergibt sich aus der Drehbewegung der Drehachse 22 um die grundteilfeste Drehachse 16 und der Drehbewegung der Halterung 18 um die Drehachse 22. Geht man von einer Stellung aus, in welcher die optische Achse 26 mit der Drehachse 16 des Lagerteils 12 zusammenfällt, die Exzentrizitäten $e_1$ und $e_2$ übereinanderliegen und die Drehachse 22 in der Verbindungsebene 68 der grundteilfesten Drehachsen 16 und 60 liegt, dann hat sich nach einer bestimmten Zeit der Lagerteil 12 um die Drehachse 16 um einen Winkel $\varphi_1$, gedreht, wie in Fig. 3 dargestellt ist. Die Halterung 18 hat sich um einen Winkel $\varphi_2$ um die Drehachse 22 gedreht.

Der Zahnkranz 58 dreht sich mit konstanter Umlaufgeschwindigkeit um die Antriebsachse 60, also nicht um den Mittelpunkt 64. Der Abstand zwischen der Antriebsachse 60 und dem Eingriffspunkt der Zahnkränze 46 und 48 ändert sich im Verlaufe einer Umdrehung. Dadurch ändert sich auch die Umfangsgeschwindigkeit im Eingriffspunkt relativ zu dem Grundteil 10. Da die Wälzkreisdurchmesser der Zahnkränze 46 und 58 gleich sind, kompensiert diese Ungleichförmigkeit der Umfangsgeschwindigkeit gerade die Ungleichförmigkeit, die sich aus der kreisenden Bewegung der Drehachse 22 um die Drehachse 16 ergeben würde. Die Halterung 18 dreht sich dadurch gegenüber dem Grundteil 10 in entgegengesetzter Drehrichtung um den gleichen Winkel, um den sich der Lagerteil 12 gedreht hat. Es ist $\varphi_2 = \varphi_1$. Die optische Achse 26 wird am Ende der Exzentrizität $e_2$ um den gleichen Winkel gegenüber der Drehachse 22 nach oben in Fig. 3 verschwenkt, um den die Drehachse 22 am Ende der gleich großen Exzentrizität $e_1$ nach unten in Fig. 3 verschwenkt wird. Die optische Achse 26 bewegt sich somit geradlinig in der Ebene 70 hin- und her.

Fig. 4 zeigt einen konstruktiven Aufbau einer optischen Abtastvorrichtung, wie sie bei einem Suchkopf für einen zielsuchenden Flugkörper verwendbar ist. Auch hier sind entsprechende Teile mit den gleichen Bezugszeichen versehen wie in den übrigen Figuren. Das optische Abbildungssystem 72, durch welches ein im Unendlichen liegendes Gesichtsfeld in der Ebene eines Detektors 74 abgebildet wird, enthält Linsen 76, 78 und 80 sowie die beiden beweglichen Linsen 36 und 38. Der Grundteil 10 bildet eine Fassung 82, in welcher die Linsen 76, 78 und 80 gehaltert sind. Der Lagerteil 12 ist über Kugellager 14 in dem Grundteil 10 gelagert. Er bildet einen Ring mit einer exzentrischen Bohrung 84. In dieser exzentrischen Bohrung 84 ist die Halterung 18 über Kugellager 20 gelagert. Die Halterung bildet eine Fassung für die Linsen 36 und 38, die exzentrisch zu den Kugellagern 20 angeordnet sind.

An dem Lagerteil 12 sitzt der Zahnkranz 44, der ein Ende der Halterung 18 umgibt. An dem Ende der Halterung 18 sitzt neben dem Zahnkranz 44 und exzentrisch dazu der Zahnkranz 46. Ein Zahnrad mit dem Zahnkranz 48 sitzt konzentrisch auf der Welle 86 eines Getriebemotors 88 und ist mit dem Zahnkranz 44 des Lagerkörpers 12 in Eingriff. Ein Zahnrad mit dem Zahnkranz 58 sitzt exzentrisch auf der Welle 86 und ist mit dem Zahnkranz 46 der Halterung 18 in Eingriff.

Die Stellung der Linsen 36 und 38 zur optischen Achse des Suchkopfes kann durch eine Kodierscheibe an dem Getriebemotor  88 ausgelesen werden.

Eine abgewandelte Ausführung ergibt sich, wenn die optischen Mittel 24 ein Abbildungssystem entsprechend den Linsen 36,38 aufweisen, das zentral zu der Drehachse 22 auf der Halterung 18 angebracht ist, sowie ein Prisma, durch welches die optische Achse der optischen Mittel 24 in der Ebene des Detektors 74 gegenüber der Drehachse seitlich versetzt wird.

Patentansprüche

1. Optische Abtasteinrichtung, insbesondere für Suchköpfe bei zielsuchenden Flugkörpern, enthaltend

(a)   einen Grundteil (10)

(b)   einen an dem Grundteil (10) sitzenden Detektor (74)

(c)   eine um eine Drehachse (22) drehbar gelagerte und antreibbare Halterung (18) und

(d)   ein optisches Abbildungssystem (72),

   ($d_1$)   durch welches ein Gesichtsfeld in der Ebene des Detektors (74) abbildbar ist und

   ($d_2$)   welches rotationssymmetrische abbildende optische Mittel (24) enthält, die auf der Halterung (18) angeordnet sind und eine optische Achse (26) definieren, welche exzentrisch zu·der Drehachse (22) der Halterung (18) verläuft,

dadurch gekennzeichnet, daß (e)   die Halterung (18) in einem seinerseits gegenüber dem Grundteil (10) um eine Drehachse (16) drehbar gelagerten und antreibbaren Lagerteil (12) gelagert ist und (f)  die Drehachse (22) der Halterung (18) exzentrisch zu der Drehachse (16) dieses Lagerteils (12) verläuft.

2.  Abtasteinrichtung nach Anspruch 1, dadurch gekennzeichnet, daß die Halterung (18) und der Lagerteil (12) unabhängig voneinander antreibbar sind.

3.  Abtasteinrichtung nach Anspruch 2, dadurch gekennzeichnet, daß die  Halterung (18) und der Lagerteil (12) mit unterschiedlichen Drehzahlen angetrieben sind.

4.  Abtasteinrichtung nach Anspruch 2, dadurch gekennzeichnet, daß

(a)  die Halterung (18) und der Lagerteil (12) mit gleicher Drehzahl gegensinnig angetrieben sind und

(b)  die Exzentrizität $(e_1)$ zwischen den Drehachsen (22,16) der Halterung (18) und des Lagerteils (12) gleich ist der Exzentrizität $(e_2)$ zwischen der Drehachse (22) der Halterung (18) und der optischen Achse (26) der darauf angeordneten abbildenden optischen Mittel (24).

5.  Abstasteinrichtung nach Anspruch 4, dadurch gekennzeichnet, daß zum Antrieb der Halterung (18) und des Lagerteils (12)

(a)  ein erster, um eine grundteilfeste Antriebsachse (52) antreibbarer, zu dieser Antriebsachse (52) konzentrischer Zahnkranz (48) vorgesehen ist sowie

(b)  ein zweiter Zahnkranz (44), der

(b$_1$)  an dem Lagerteil (12) konzentrisch zu dessen Drehachse (16) angebracht und

(b$_2$)  mit dem ersten Zahnkranz (48) in Eingriff ist,

(c)  ein dritter Zahnkranz (58), der

(c$_1$)  um eine grundteilfeste Antriebsachse (60) antreibbar ist und

(c$_2$)  zu dieser Antriebsachse (60) mit einer Exzentrizität (e$_3$) exzentrisch ist, die gleich der Exzentrizität (e$_1$) zwischen den Drehachsen (22,16) der Halterung (18) und des Lagerteils (12) ist, und

(d)  ein vierter Zahnkranz (46), der

(d$_1$)  an der Halterung (18) konzentrisch zu deren Drehachse (22) angebracht und

(d$_2$)  mit dem dritten Zahnkranz (58) in Eingriff ist, und

(e)  der Lagerteil (12) mit der gleichen Drehzahl jedoch entgegengesetzt umläuft wie der dritte Zahnkranz (58).

6.  Abtasteinrichtung nach Anspruch 5, dadurch gekennzeichnet, daß die Wälzkreisdurchmesser von drittem und viertem Zahnkranz (58 bzw. 46) gleich sind.

7. Abtasteinrichtung nach Anspruch 1, dadurch gekennzeichnet, daß

    (a) die optischen Mittel (24) ein zentral zu der
        Drehachse (22) auf der Halterung (18) angebrachtes Abbildungssystem und

    (b) ein Prisma aufweisen, durch welches die optische
        Achse der optischen Mittel (24) in der Ebene
        des Detektors (74) gegenüber der Drehachse (22)
        seitlich versetzt wird.

*Fig. 2*

*Fig. 1*

**Fig.3**

Fig.4

3/3

0179297